# EUROPEAN PATENT SPECIFICATION

(11) **EP 2 296 972 B1**
(45) Date of publication and mention of the grant of the patent: **21.05.2014**
(21) Application number: 09767486.5
(22) Date of filing: 10.06.2009
(51) Int. Cl.: G07C 5/08, B64D 47/00, B64D 45/00, G01C 23/00

(54) **FLIGHT RECORDER HAVING INTEGRAL RESERVE POWER SUPPLY WITHIN FORM FACTOR OF ENCLOSURE AND METHOD THEREFOR**
FLUGSCHREIBER MIT INTEGRIERTER RESERVESTROMVERSORGUNG IN EINEM GEHÄUSEFORMFAKTOR UND VERFAHREN DAFÜR
ENREGISTREUR DE VOL À ALIMENTATION ÉLECTRIQUE DE RÉSERVE INTÉGRÉE CONTENUE DANS LE FACTEUR DE FORME DE L'ENCEINTE, ET PROCÉDÉ À CET EFFET

(30) Priority: 19.06.2008 US 142129
(43) Date of publication of application: 23.03.2011
(73) Proprietor: L-3 Communications Corporation, Sarasota, FL 34232 (US)
(72) Inventor: WINTERHALTER, Michael, C., Nokomis FL 34275 (US); WILSON, Glenn, C., Bradenton FL 34202 (US)
(74) Representative: Dendorfer, Claus
(86) International application number: PCT/US2009/046815
(87) International publication number: WO 2009/155176

(56) References cited:
- US-A- 4 644 494
- US-A1- 2003 060 941
- US-A1- 2003 152 145
- US-A1- 2006 106 582
- US-B1- 6 741 896

## Description

### CROSS-REFERENCE TO RELATED APPLICATION

This application claims the benefit of United States Patent Application No. 12/142,129, filed June 19, 2008.

### FIELD OF THE INVENTION

The present invention relates in general to avionics and, more particularly, to a flight recorder having integral reserve power supply physically disposed within a form factor of the enclosure.

### BACKGROUND OF THE INVENTION

Most commercial and military aircraft, as well as many civilian aircraft, carry flight data recorders (FDRs) or cockpit voice recorders (CVRs). During normal flight operations, the FDR records specific aircraft performance parameters, such as air speed, altitude, vertical acceleration, time, magnetic heading, control-column position, rudder-pedal position, control-wheel position, horizontal stabilizer, and fuel flow. The CVR records cockpit voices and other audio such as conversations between ground control and flight crew. The FDR and CVR have an enclosure containing electronic interface and processing circuits and a crash survivable memory unit (CSMU). The CSMU contains non-volatile memory for storing the flight data and voice data.

In the event of a crash, most of the flight recorder chassis and inner components may be damaged. However, the CSMU is designed to survive the impact, potential ensuing fire, and aftermath of various environmental conditions. For example, under the EUROCAE ED-112 standard, the flight recorder is required to withstand an impact of 3600 g and temperatures up to 1000 °C. The data stored on the CSMU should still be recoverable.

Popularly known as the "black box" and regulated by International Civil Aviation Organization (ICAO), these units are crucial in investigating and understanding aircraft accidents. In fact, the recovery of the black box is second only to the recovery of survivors and victims. FDRs can also be used to study air safety issues, material degradation, unsafe flying procedures, and jet engine performance. The outer housing of the flight recorder is painted bright orange for ready identification and generally located in the tail section of the aircraft to maximize survivability.

The flight recorder receives electrical operating power from the main aircraft power bus. In an emergency condition, the main aircraft power bus may be disabled, which could cause loss of critical data in the moments before a crash. Accordingly, an auxiliary power supply is typically used to provide short term operating power for the flight recorder should the main aircraft power bus become disabled. The auxiliary power source is a separate unit which is wired to the flight recorder. US patent 6410995 discloses this two-unit approach, i.e., CVR and separate auxiliary power supply.

The separate auxiliary power supply associated with prior art flight recorders has certain disadvantages. The FDR and CVR have specific dimensional space requirements imposed by various governing bodies. The separate auxiliary power supply requires additional space well beyond the dimensional specifications of the flight recorder itself. In addition, the two-unit approach (flight recorder and separate auxiliary power supply) increases maintenance, service, and replacement costs.

US 2006/0106582 A1 discloses an apparatus for monitoring a parameter associated with a structural component. The apparatus comprises a housing which is adapted for connection to a strut of an aircraft landing gear. The housing incorporates a strain gauge that measures the strain in the structural component when it is loaded during operation of the aircraft. A power supply is incorporated within the housing for powering all of the electrical components of the apparatus.

US 2003/0060941 A1 discloses an aircraft surveillance system comprising a broadcasting system for transmitting flight information from an aircraft, and a power source. The system comprises a sturdy, tamper proof housing.

### SUMMARY OF THE INVENTION

The invention is defined by the independent claims, taking due account of any element which is equivalent to an element specified in the claims. The dependent claims concern optional elements of some embodiments of the invention.

A need exists for a reserve power supply that does not exceed the dimensional specifications of the flight recorder. In one embodiment, the present invention is a flight recorder comprising an enclosure having a notch. An electronic interface is disposed within the enclosure. The electronic interface is coupled for receiving data. A memory unit is disposed within the enclosure and electrically coupled to the electronic interface for storing the data. A reserve power supply is physically disposed within the notch of the enclosure. The reserve power supply has an electrical connector coupled to the enclosure for providing an operating voltage to the electronic interface and memory unit. The physical dimensions of the reserve power supply and electrical connector are disposed within a form factor of the enclosure.

In another embodiment, the present invention is a data recorder comprising an enclosure and electronic interface disposed within the enclosure. The electronic interface is coupled for receiving data. A memory unit is electrically coupled to the electronic interface for storing the data. A reserve power supply is physically disposed within a form factor of the enclosure. The reserve power supply provides an operating voltage to the electronic interface and memory unit.

In another embodiment, the present invention is an aircraft comprising an airframe and flight recorder mounted to the airframe. The flight recorder includes an enclosure and electronic interface disposed within the enclosure. The electronic interface is coupled for receiving data. The flight recorder further includes a memory unit electrically coupled to the electronic interface for storing the data, and a reserve power supply physically disposed within a form factor of the enclosure. The reserve power supply provides an operating voltage to the electronic interface and memory unit.

In another embodiment, the present invention is a method of making a data recorder comprising the steps of providing an enclosure having a notch, disposing an electronic interface within the enclosure, disposing a memory unit within the enclosure, electrically connecting the memory unit to the electronic interface, and disposing a reserve power supply physically within the notch of the enclosure. The reserve power supply is coupled for providing an operating voltage to the electronic interface and memory unit.

### BRIEF DESCRIPTION OF THE DRAWINGS

FIG. 1 is a perspective view of an aircraft with a flight recorder;
FIG. 2a-2b show an enclosure for the flight recorder with an integral reserve power supply physically residing within a form factor of the enclosure;
FIG. 3 is a cut-away view of the flight recorder with the integral reserve power supply; and
FIG. 4 is a functional block diagram of the aircraft interface to the flight recorder with the integral reserve power supply.

### DETAILED DESCRIPTION OF THE DRAWINGS

The present invention is described in one or more embodiments in the following description with reference to the Figures, in which like numerals represent the same or similar elements. While the invention is described in terms of the best mode for achieving the invention's objectives, it will be appreciated by those skilled in the art that it is intended to cover alternatives, modifications, and equivalents as may be included within the spirit and scope of the invention as defined by the appended claims and their equivalents as supported by the following disclosure and drawings.

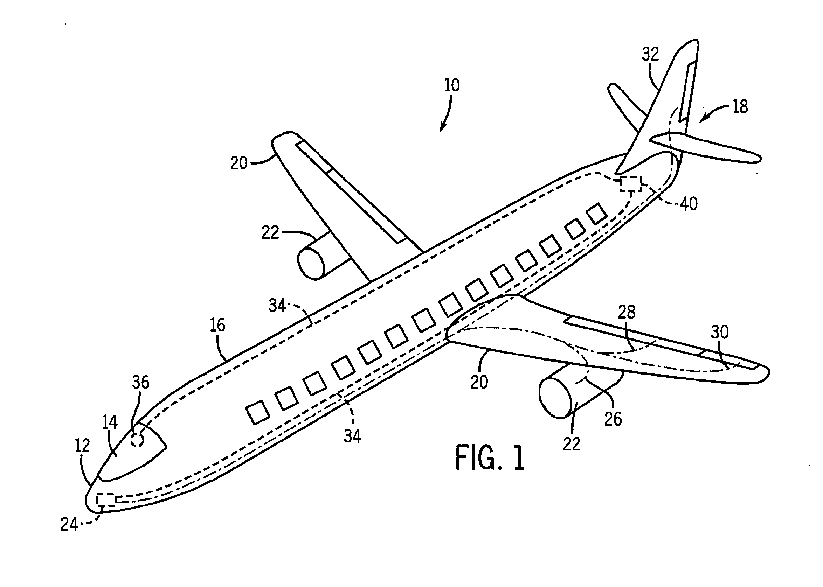

Referring now to the drawings, and more particularly to FIG. 1, a commercial aircraft 10 is shown with nose section 12, cockpit 14, fuselage or airframe 16, tail section 18, wings 20, and engines 22. A flight data acquisition unit 24 can be positioned in nose 12 to acquire flight information, such as air speed, altitude, vertical acceleration, time, magnetic heading, control-column position, rudder-pedal position, control-wheel position, wing flap position, horizontal stabilizer, fuel flow, and landing gear position, from corresponding sensors located throughout aircraft 10. Sensors are placed on critical surfaces and system components of the aircraft to convert real-time physical flight measurements into electrical signals for flight data acquisition unit 24. Typical aircraft sensors include engine speed sensor 26, wing flap position sensor 28, aileron position sensor 30, and rudder position sensor 32. Aircraft sensors 26-32 can be connected to flight data acquisition unit 24 through a fly-by-wire data bus 34 or wireless channel. Other flight related information, e.g., audio and video data, is collected by audio/video recorder 36 which can be located in the cockpit, passenger area, cargo hold, and landing gear compartment. The flight data acquisition unit 24 and audio/video recorder 36 route flight related information to flight recorder 40 by data bus 34, direct link, or wireless transmission. Flight recorder 40 is mounted to airframe 16. Flight recorder 40 can be implemented as a flight data recorder (FDR), cockpit voice recorder (CVR), cockpit voice and flight data recorder (CVDR), or other combination flight data and audio/video recorder.

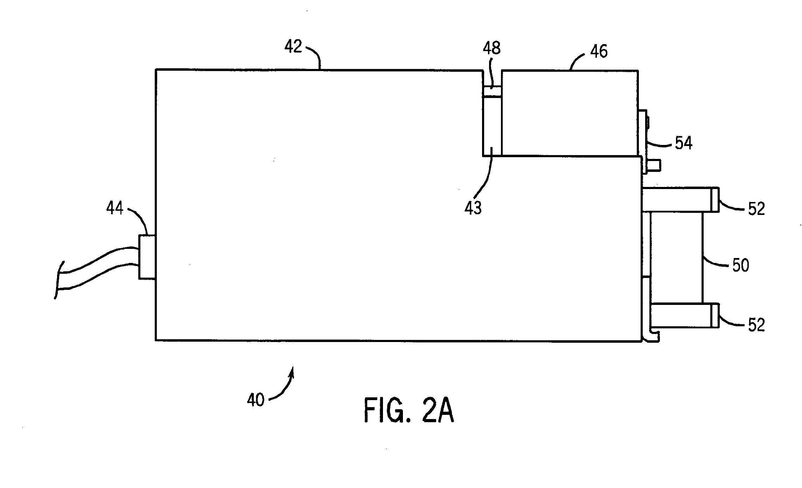

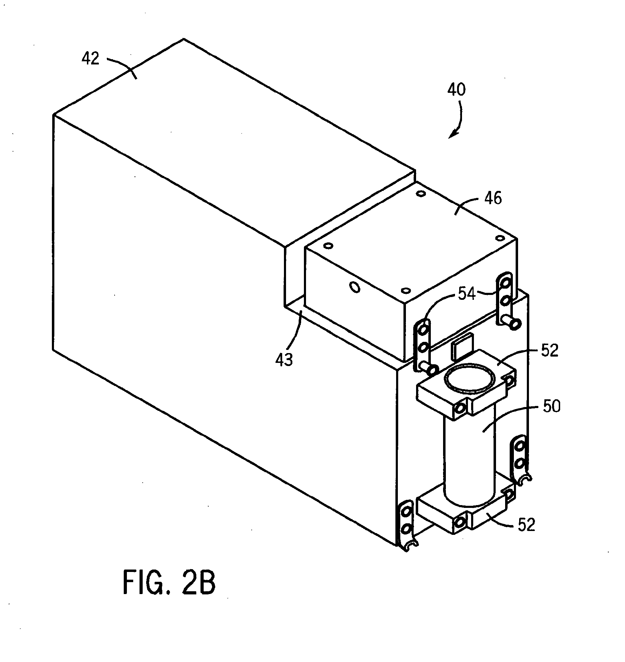

Further detail of flight recorder 40 is shown in FIGs. 2a and 2b. FIG. 2a is a side view; FIG. 2b is a perspective view of flight recorder 40. Flight recorder 40 records flight data and audio/video data. Flight recorder 40 is a line replaceable unit that simultaneously records audio, video, controller pilot data link communication (CPDLC) messages, and flight data. Flight recorder 40 includes a compact, lightweight, environmentally sealed enclosure 42 with electrical connector 44 for receiving flight related information from flight data acquisition unit 24 and audio/video recorder 36 via data bus 34, direct link, or wireless transmission. In one embodiment, connector 44 is a 57-pin, DPXB-style connector with a data rate of 1024 words per second. Enclosure 42 is a 1/2-ATR short, waterproof case which is compliant with ARINC 404A. Enclosure 42 has a generally rectangular form factor with an L-shaped notch or cut-out 43 formed along one side or corner of the case. Notch 43 can also be U-shaped and disposed in a mid-section of any surface of enclosure 42.

A recorder independent power supply (RIPS) 46 is a self-contained battery-pack module that is mounted to and physically resides within notch 43 of enclosure 42. RIPS 46 is secured to enclosure 42 by electrical connector 48 and mechanical clamps 54. RIPS 46 provides a reserve operating voltage and electrical power to printed circuit boards (PCB) and electronic components located within enclosure 42 by way of electrical connector 48. RIPS 46 typically uses nickel cadmium (NiCd) or lithium ion (Li-Ion) batteries. RIPS 46 is recharged from the aircraft power bus or flight recorder main power supply. RIPS 46 is capable of providing 28 VDC at 12 watts (W) for about 10.5 minutes.

RIPS 46 and electrical connector 48 are integral components of flight recorder 40. The physical dimensions of RIPS 46 and electrical connector 48 are disposed within the generally rectangular form factor of the single enclosure 42. That is, RIPS 46 and electrical connector 48 physically reside within the dimensions of notch 43 and provide flight recorder 40 with reserve operating power without increasing its form factor. In other embodiments, RIPS 46 and electrical connector 48 can be placed inside enclosure 42. In any case, the enclosure 42 of flight recorder 40, including integral RIPS 46 and electrical connector 48, is compliant with the dimensional specifications for flight recorders mandated by governing bodies, e.g., TSO 123b and 124b, EUROCAE ED-112, ARINC 747, and ARINC 757.

Light-emitting underwater locator beacon 50 is mounted to enclosure 42 with clamps 52. Beacon 50 serves to locate and retrieve flight recorder 40 in the event of a crash or other aircraft incident.

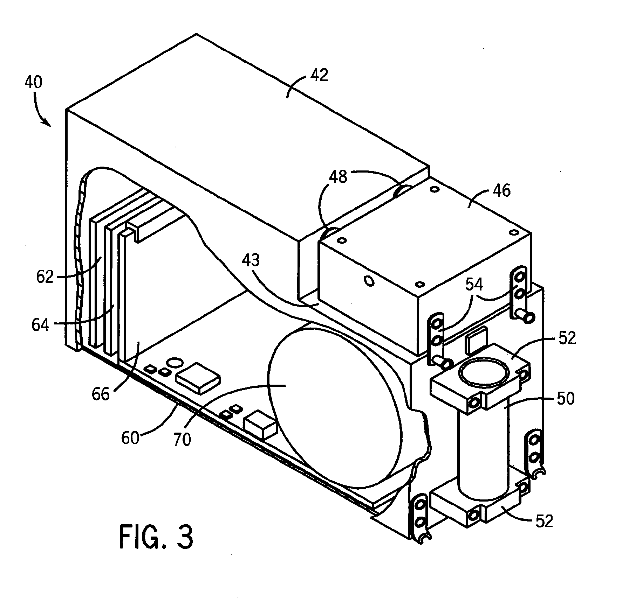

FIG. 3 is a cut-away view of flight recorder 40 showing internal PCBs and other electronic components, such as acquisition processor board 60, audio compression board 62, video compression board 64, and aircraft interface board 66. A crash survivable memory unit (CSMU) 70 is electrically connected to PCBs 60-66 for receiving and storing the flight related information, including flight data and audio/video data. CSMU 70 contains a non-volatile memory device which can be implemented as stacked memory cards having solid state flash memory chips, or other non-volatile storage devices such as magnetic or optical mass storage medium. CSMU 70 is constructed for non-pressurized and non-temperature-controlled applications and compliant with the environmental requirements of DO-160F. The outer housing of CSMU 70 is a heat resistant material such as stainless steel. A thermal insulating layer is disposed between the outer housing and non-volatile memory device. Enclosure 42 is painted international orange for ready identification.

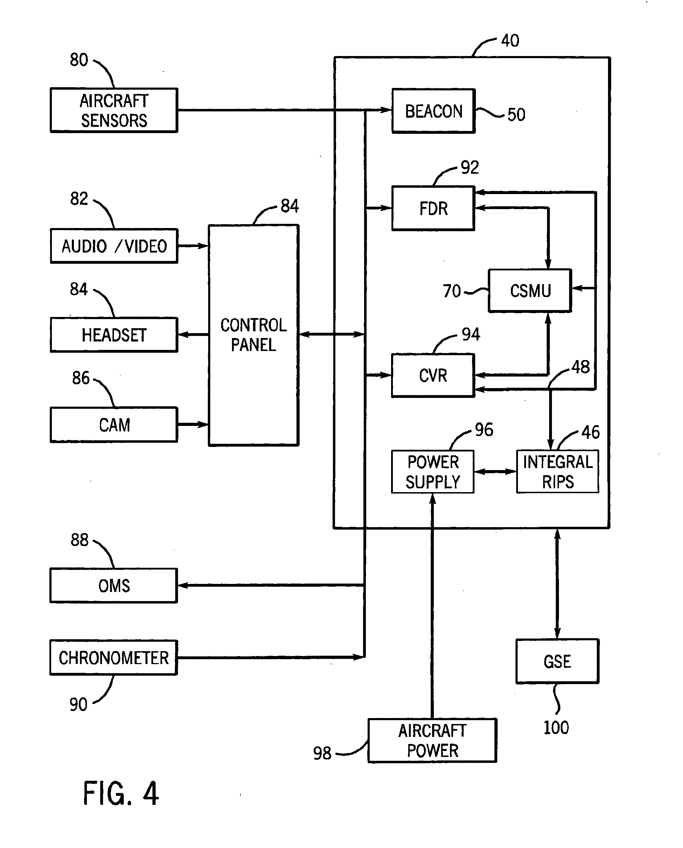

FIG. 4 is a block diagram of the flight data acquisition and recorder system. During normal flight operations, flight recorder 40 records specific aircraft performance parameters and stores the flight information on CSMU 70. For example, aircraft sensors 80 collect flight data from aircraft surfaces and major system components, as described in FIG. 1. The sensor data is routed to flight recorder 40. Audio and video data 82, e.g., from microphone and camera, is routed to control panel 84 which is typically located in the cockpit. Control panel 84 is a user interface to flight recorder 40, including control switches, jacks, and indicators that show erase complete status, test complete status, headset jack, CAM input, erase switch, and test switch. Headset 84 and cockpit area microphone (CAM) 86 for the crew also connect to control panel 84. On-board maintenance system (OMS) 88 and chronometer or timer 90 also connect to flight recorder 40.

Flight recorder 40 includes beacon 50, FDR electronic components 92, CVR electronic components 94, and CSMU 70. Flight recorder 40 may further include an electronic interface for any combination of audio, video, and flight data. The flight information, as well as audio/video data, are processed through the electronic components and stored on CSMU 70 for later analysis in the event of a crash or other significant event. The flight data can also be used to study air safety issues, material degradation, unsafe flying procedures, and jet engine performance.

In one embodiment, flight recorder 40 simultaneously records four separate channels of cockpit audio, converts the audio to a digital format, and stores the data in memory. Flight recorder 40 records two hours of high quality audio from the four cockpit audio inputs: (1) cockpit spare audio input (3rd crew member, public address system), (2) co-pilot's audio, boom, mask, and hand-held microphone input, (3) pilot's audio, boom, mask and hand-held microphone input, and (4) CAM input. The audio inputs are conditioned, amplified, and equalized as necessary. The resulting signals are converted to digital pulse code modulation (PCM) data. Pre-amplification and automatic gain control for interfacing the cockpit area microphone with flight recorder 40 is processed internally, thus eliminating the need for a cockpit control unit. The flight data from aircraft sensors 80 is received, buffered, and stored in CSMU 70, logically separate from the cockpit audio and video data. CSMU 70 has capacity for twenty-five hours of flight data and audio/video data.

In normal operation, power supply 96 receives electric power from aircraft power bus 98 in the form of 28 volts direct current (VDC) or 115 volts alternating current (VAC). Power supply 96 provides normal operating power for FDR electronic components 92, CVR electronic components 94, and CSMU 70. Beacon 50 has its own battery which can last for years upon activation.

In the event that aircraft power bus 98 is disabled or power supply 96 fails, e.g., in the moments prior to a crash, flight recorder 40 initiates a backup operation to update and store data on CSMU 70. The backup process can require up to 10 minutes to complete. RIPS 46 provides the reserve electrical operating power for flight recorder 40 during the backup process. FIG. 4 shows electrical connector 48 coupled to FOR electronic components 92, CVR electronic components 94, and CSMU 70 for providing a reserve operating voltage for these components. At the conclusion of backup, RIPS 46 shuts off and does not start again until aircraft power bus 98 is restored. Flight recorder 40 records the event that a backup has occurred using a cycle counter. If aircraft power 98 is restored prior to the end of the backup process, RIPS 46 returns to standby mode and begins re-charging without incrementing the cycle counter. RIPS 46 is recharged by power supply 96 or aircraft power bus 98 and can function for up to 4000 backup cycles before replacement. RIPS 46 reports failure of the internal battery pack. RIPS 46 is modular, removable, and replaceable by way of electrical connector 48 and clamps 54.

RIPS 46 is an integral component of flight recorder 40 and requires no special connectors, wiring, space allocation, or other modifications to existing systems to provide the reserve power supply to the flight recorder. RIPS 46 and electrical connector 48 physically reside within the form factor of enclosure 42 and do not require any space beyond the dimensional specifications for flight recorders. RIPS 46 is therefore independent, from the main aircraft power source and wiring.

Ground support equipment (GSE) 100 is connected to flight recorder 40 for maintenance, diagnostics, status, and data retrieval from CSMU 70. GSE 100 uses an Ethernet interface or other electronic communication protocol to external equipment such as a computer.

Flight recorder 40 is applicable to fixed wing and rotor aircraft, including commercial jets, military aircraft, drones, ultra-light aircraft, blimps, balloons, and flying wings. Flight recorder 40 can also be adapted to marine transportation systems such as boats, submarines, hovercraft, also spanning to pleasure/recreational, scientific, commercial, land-based vehicles, and space travel.

While one or more embodiments of the present invention have been illustrated in detail, the skilled artisan will appreciate that modifications and adaptations to those embodiments may be made without departing from the scope of the present invention as set forth in the following claims.

## Claims

1. A data recorder, comprising:
an enclosure (42) having an inwardly extending cut-out (43) formed in an outer peripheral surface thereof, said cut-out (43) sized and shaped to receive at least a reserve power supply (46);
an electronic interface disposed within the enclosure (42), the electronic interface being coupled for receiving data;
a memory unit (70) disposed within the enclosure (42) and electrically coupled to the electronic interface for storing the data; and
said reserve power supply (46) physically and removably disposed within the cut-out (43) and external to the enclosure (42), the reserve power supply (46) having an electrical connector (48) coupled to a mating electrical connector (48) of the enclosure (42) for providing an operating voltage to the electronic interface and memory unit (70).

2. The data recorder of claim 1, further including a clamp (54) for securing the reserve power supply (46) to the enclosure (42).

3. The data recorder of claim 1, further including a battery disposed in the reserve power supply (46).

4. The data recorder of claim 1, wherein the memory unit (70) stores flight data, audio data, or video data.

5. The data recorder of any of claims 1-4, wherein:
the data recorder is a flight recorder (40).

6. The data recorder of claim 5, wherein the memory unit (70) includes a non-volatile memory device.

7. The data recorder of claim 5, further including a beacon (50) mounted to the enclosure (42).

8. The data recorder of any of claims 1-7, wherein physical dimensions of the reserve power supply (46) and the electrical connector (48) are disposed within a form factor which is pre-defined for said data recorder by an applicable standard.

9. An aircraft (10), comprising:
an airframe (16); and
a flight recorder (40) mounted to the airframe (16), the flight recorder (40) including
(a) an enclosure (42) having an inwardly extending cut-out (43) formed in an outer peripheral surface thereof, the cut-out sized (43) and shaped to receive at least a reserve power supply (46),
(b) an electronic interface disposed within the enclosure (42), the electronic interface being coupled for receiving data,
(c) a memory unit (70) electrically coupled to the electronic interface for storing the data, and
(d) said reserve power supply (46) physically disposed within the cut-out (43) and external to the enclosure (42), the reserve power supply (46) providing an operating voltage to the electronic interface and memory unit (70).

10. The aircraft (10) of claim 9, wherein physical dimensions of the reserve power supply (46) are disposed within a form factor which is pre-defined for said flight recorder (40) by an applicable standard.

11. A method of making a data recorder, comprising:
providing an enclosure (42) having an inwardly extending cut-out (43) formed in an outer peripheral surface thereof, said cut-out (43) sized and shaped to receive at least a reserve power supply (46);
disposing an electronic interface within the enclosure (42);
disposing a memory unit (70) within the enclosure (42);
electrically connecting the memory unit (70) to the electronic interface; and
disposing said reserve power supply (46) physically within the cut-out (43) and external to the enclosure (42), the reserve power supply (46) being coupled to said data recorder for providing an operating voltage to the electronic interface and memory unit (70).

12. The method of claim 11, further including securing the reserve power supply (46) to the enclosure (42).

13. The method of claim 11, further including removing the reserve power supply (46) from the enclosure (42).

14. The method of claim 11, further including:
disposing a battery in the reserve power supply (46), and/or
disposing a non-volatile memory device in the memory unit (70).

15. The method of claim 11, wherein the memory unit (70) stores flight data, audio data, or video data.

## Patentansprüche

1. Datenaufzeichnungsvorrichtung, mit:
einem Gehäuse (42), das eine sich nach innen erstreckende Aussparung (43) aufweist, die in einer Außenumfangsfläche des Gehäuses (42) ausgebildet ist, wobei die Aussparung (43) zum Aufnehmen mindestens einer Reservestromversorgung (46) dimensioniert und geformt ist;
einer elektronischen Schnittstelle, die in dem Gehäuse (42) angeordnet ist, wobei die elektronische Schnittstelle zum Empfangen von Daten angeschlossen ist;
einer Speichereinheit (70), die in dem Gehäuse (42) angeordnet ist und elektrisch mit der elektronischen Schnittstelle gekoppelt ist, um die Daten zu speichern; und
der Reservestromversorgung (46), die körperlich und entfernbar in der Aussparung (43) und außerhalb des Gehäuses (42) angeordnet ist, wobei die Reservestromversorgung (46) einen elektrischen Verbinder (48) aufweist, der mit einem passenden elektrischen Verbinder (48) des Gehäuses (42) gekoppelt ist, um der elektronischen Schnittstelle und der Speichereinheit (70) eine Betriebsspannung zur Verfügung zu stellen.

2. Datenaufzeichnungsvorrichtung nach Anspruch 1, ferner mit einer Halterung (54), um die Reservestromversorgung (46) sicher an dem Gehäuse (42) zu halten.

3. Datenaufzeichnungsvorrichtung nach Anspruch 1, ferner mit einer in der Reservestromversorgung (46) angeordneten Batterie.

4. Datenaufzeichnungsvorrichtung nach Anspruch 1, bei der die Speichereinheit (70) Flugdaten, Audiodaten oder Videodaten speichert.

5. Datenaufzeichnungsvorrichtung nach einem der Ansprüche 1 bis 4, bei der:
die Datenaufzeichnungsvorrichtung ein Flugschreiber (40) ist.

6. Datenaufzeichnungsvorrichtung nach Anspruch 5, bei der die Speichereinheit (70) eine nicht-flüchtige Speichereinrichtung aufweist.

7. Datenaufzeichnungsvorrichtung nach Anspruch 5, ferner mit einem an dem Gehäuse (42) angebrachten Ortungssignalsender (50).

8. Datenaufzeichnungsvorrichtung nach einem der Ansprüche 1 bis 7, bei der körperliche Abmessungen der Reservestromversorgung (46) und des elektrischen Verbinders (48) innerhalb eines Formfaktors angeordnet sind, der durch eine einschlägige Norm für die Datenaufzeichnungsvorrichtung vordefiniert ist.

9. Flugzeug (10), mit:
einer Flugzeugzelle (16); und
einem an die Flugzeugzelle (16) angebrachten Flugschreiber (40), wobei der Flugschreiber (40) aufweist:
(a) ein Gehäuse (42) mit einer sich nach innen erstreckenden Aussparung (43), die in einer Außenumfangsfläche des Gehäuses (42) ausgebildet ist, wobei die Aussparung (43) zum Aufnehmen mindestens einer Reservestromversorgung (46) dimensioniert und geformt ist,
(b) eine in dem Gehäuse (42) angeordnete elektronische Schnittstelle, wobei die elektronische Schnittstelle zum Empfangen von Daten angeschlossen ist,
(c) eine elektrisch mit der elektronischen Schnittstelle gekoppelte Speichereinheit (70) zum Speichern der Daten, und
(d) die Reservestromversorgung (46), die körperlich in der Aussparung (43) und außerhalb des Gehäuses (42) angeordnet ist, wobei die Reservestromversorgung (46) die elektronische Schnittstelle und die Speichereinheit (70) mit einer Betriebsspannung versorgt.

10. Flugzeug (10) nach Anspruch 9, bei dem körperliche Abmessungen der Reservestromversorgung (46) innerhalb eines Formfaktors angeordnet sind, der durch eine einschlägige Norm für den Flugschreiber (40) vordefiniert ist.

11. Verfahren zum Herstellen einer Datenaufzeichnugsvorrichtung, aufweisend:
Bereitstellen eines Gehäuses (42), das eine sich nach innen erstreckende Aussparung (43) aufweist, die in einer Außenumfangsfläche des Gehäuses (42) gebildet ist, wobei die Aussparung (43) zum Aufnehmen mindestens einer Reservestromversorgung (46) dimensioniert und geformt ist;
Einbauen einer elektronischen Schnittstelle in das Gehäuse (42);
Einbauen einer Speichereinheit (70) in das Gehäuse (42);
elektrisches Verbinden der Speichereinheit (70) mit der elektronischen Schnittstelle; und
Anbringen der Reservestromversorgung (46), und zwar körperlich innerhalb der Aussparung (43) und außerhalb des Gehäuses (42), wobei die Reservestromversorgung (46) mit der Datenaufzeichnungsvorrichtung gekoppelt wird, um der elektronischen Schnittstelle und der Speichereinheit (70) eine Betriebsspannung zu liefern.

12. Verfahren nach Anspruch 11, das weiter aufweist, die Reservestromversorgung (46) sicher an dem Gehäuse (42) anzubringen.

13. Verfahren nach Anspruch 11, das weiter aufweist, die Reservestromversorgung (46) von dem Gehäuse (42) abzunehmen.

14. Verfahren nach Anspruch 11, das weiter aufweist:
Einbauen einer Batterie in die Reservestromversorgung (46), und/oder
Einbauen einer nicht-flüchtigen Speichereinrichtung in die Speichereinheit (70).

15. Verfahren nach Anspruch 11, bei dem die Speichereinheit (70) Flugdaten, Audiodaten oder Videodaten speichert.

## Revendications

1. Enregistreur de données comprenant :
une enceinte (42) possédant une découpe (43) s'étendant vers l'intérieur formée dans la surface périphérique externe de celle-ci, ladite découpe (43) étant dimensionnée et formée pour recevoir au moins une alimentation électrique de réserve (46),
une interface électronique placée à l'intérieur de l'enceinte (42), l'interface électronique étant reliée pour recevoir des données,
une unité de mémoire (70) placée à l'intérieur de l'enceinte (42) et reliée électriquement à l'interface électronique afin de mémoriser les données, et
ladite alimentation de réserve (46) étant physiquement, et pour pouvoir se déplacer, placée à l'intérieur de la découpe (43) et de manière externe à l'enceinte (42), l'alimentation de réserve (46) possédant un connecteur électrique (48) relié à un connecteur électrique apparié (48) de l'enceinte (42) afin de fournir une tension de fonctionnement à l'interface électronique et à l'unité de mémoire (70).

2. Enregistreur de données selon la revendication 1, incluant en outre une bride de fixation (54) permettant d'assurer l'alimentation de réserve (46) sur l'enceinte (42).

3. Enregistreur de données selon la revendication 1, incluant en outre une batterie placée dans l'alimentation de réserve (46).

4. Enregistreur de données selon la revendication 1, dans lequel l'unité de mémoire (70) stocke des données de vol, des données audio ou des données vidéo.

5. Enregistreur de données selon l'une quelconque des revendications 1 à 4, dans lequel :
l'enregistreur de données est un enregistreur de vol (40).

6. Enregistreur de données selon la revendication 5, dans lequel l'unité de mémoire (70) inclut un composant de mémoire non volatile.

7. Enregistreur de données selon la revendication 5, incluant en outre une balise (50) monté sur l'enceinte (42).

8. Enregistreur de données selon l'une quelconque des revendications 1 à 7, dans lequel les dimensions physiques de l'alimentation de réserve (46) et du connecteur électrique (48) sont contenues dans un facteur de forme qui est prédéfini par une norme applicable pour ledit enregistreur de données.

9. Aéronef (10) comprenant :
une cellule (16), et
un enregistreur de vol (40) monté sur la cellule (16), l'enregistreur de vol (40) incluant
(a) une enceinte (42) possédant une découpe (43) s'étendant vers l'intérieur formée dans une surface périphérique externe de celle-ci, la découpe (43) étant dimensionnée et formée pour recevoir au moins une alimentation électrique de réserve (46),
(b) une interface électronique placée à l'intérieur de l'enceinte (42), l'interface électronique étant reliée pour recevoir des données,
(c) une unité de mémoire (70) reliée électriquement à l'interface électronique afin de mémoriser les données, et
(d) ladite alimentation de réserve (46) étant physiquement placée à l'intérieur de la découpe (43) et de manière externe à l'enceinte (42), l'alimentation de réserve (46) fournissant une tension de fonctionnement à l'interface électronique et à l'unité de mémoire (70).

10. Aéronef (10) selon la revendication 9, dans lequel les dimensions physiques de l'alimentation de réserve (46) sont contenues dans un facteur de forme qui est prédéfini par une norme applicable pour ledit enregistreur de vol (40).

11. Procédé de réalisation d'un enregistreur de données, comprenant :
la fourniture d'une enceinte (42) possédant une découpe (43) s'étendant vers l'intérieur formée dans une surface périphérique externe de celle-ci, ladite découpe (43) étant dimensionnée et formée pour recevoir au moins une alimentation électrique de réserve (46),
le placement d'une interface électronique à l'intérieur de l'enceinte (42),
le placement d'une unité de mémoire (70) à l'intérieur de l'enceinte (42),
la connexion électrique de l'unité de mémoire (70) à l'interface électronique, et
le placement physique de ladite alimentation de réserve (46) à l'intérieur de la découpe (43) et de manière externe à l'enceinte (42), l'alimentation de réserve (46) étant reliée au dit enregistreur de données pour fournir une tension de fonctionnement à l'interface électronique et à l'unité de mémoire (70).

12. Procédé selon la revendication 11, incluant en outre la fixation de l'alimentation de réserve (46) à l'enceinte (42).

13. Procédé selon la revendication 11, incluant en outre l'élimination de l'alimentation de réserve (46) de l'enceinte (42).

14. Procédé selon la revendication 11, incluant en outre :
le placement d'une batterie dans l'alimentation de réserve (46), et/ou
le placement d'un dispositif de mémoire non volatile dans l'unité de mémoire (70).

15. Procédé selon la revendication 11, dans lequel l'unité de mémoire (70) stocke des données de vol, des données audio ou des données vidéo.
